# EUROPEAN PATENT APPLICATION

(11) **EP 1 825 986 A2**
(43) Date of publication of application: **29.08.2007**
(21) Application number: 07075130.0
(22) Date of filing: 14.02.2007
(51) Int. Cl.: B29C 45/50, F15B 15/18

(54) **Device for moving in the longitudinal direction a screw shaft for mixing machines and mixing machine equipped with said device**

(30) Priority: 22.02.2006 IT MI20060321
(71) Applicant: PARKER CALZONI S.r.l., 40011 Anzola dell'Emilia (Bologna) (IT)
(72) Inventor: De Leonardis, Loris c/o Parker Calzoni S.r.l., 40011 Anzola dell'Emilia (BO) (IT); Mora, Michele c/o Parker Calzoni S.r.l., 40011 Anzola dell'Emilia (BO) (IT)
(74) Representative: Raimondi, Margherita

(57) **Abstract**

Device for moving in the longitudinal direction (X-X) a shaft (120;1120;2120) with screw (121) rotationally driven by a motor (140;2140), comprising at least one cylinder (100;1100;2100) coaxial with said shaft (120;1120;2120) and provided with at least one rotating piston (131;1131;2131) rigidly connected to the shaft (120;1120;2120) and able to produce a displacement in either direction of the shaft (120;1120;2120) from a first retracted end-of-travel position into a second advanced end-of-travel position, and vice versa.

## Description

The present invention relates to a device for moving in the longitudinal direction a screw shaft for mixing machines and a mixing machine equipped with said device.

It is known, for example in the technical sector relating to machines for the injection-moulding of plastics that there exists the need to allow displacement of the mixing screw in both directions and pushing of the material; in greater detail the screw must:
- during a first step, be retracted with respect to the material inlet mouth by means of a screw-like (rotary translational) movement which pushes forwards the granules of material which melt gradually until the required plasticity necessary for achieving correct extrusion is obtained;
- during a second step, be able to advance towards the outlet mouth in order to inject into the mould the melted material which, once solidified, will assume the shape of the final plastic article.

Devices which are able to allow the axial movement, in both directions, of the mixer screw are also known; these known devices may be of the following type:
- with a motor for actuating the screw, fixed to the housing of the mixing machine and therefore axially stationary; in this case it is envisaged providing a cylinder arranged between the motor and the shaft of the screw so that the latter is able to be displaced;
- with a motor fixed to a flange which is axially movable on respective guides and to which flange the shaft of the screw is also fastened.

Although fulfilling their function, these solutions nevertheless have the drawback consisting in the fact that it is required to provide an axial bearing, or equivalent mechanical thrust-bearing device, in order to prevent the screw from transmitting axial thrusts onto the driving shaft owing to the forces produced by the thrust acting on the material.

Since the latter are very high, the dimensions of the bearing and the machine structure must necessarily be increased in order to safeguard the driving shaft with an obvious increase in the amount of machining, the weight as well as the production, storage and despatch costs.

The technical problem which is posed, therefore, is that of providing a device for actuating shafts of screws for moving material inside mixing chambers, such as, for example, presses for the injection-moulding of plastics, which is able to absorb the axial thrusts imparted by the said shaft without the need for auxiliary means such as axial bearings or the like.

In connection with this problem it is also required that this device should have small dimensions, be easy and inexpensive to produce and assemble and be able to be installed also on ready-existing machines without the need for complicated adaptation.

These results are obtained according to the present invention by a device for moving in the longitudinal direction a screw shaft which is rotationally driven by a motor, comprising at least one cylinder coaxial with said shaft and provided with at least one rotating piston rigidly connected to the shaft and able to produce a displacement in either direction of the shaft from a first retracted end-of-travel position into a second advanced end-of-travel position, and vice versa.

Further details may be obtained from the following description of a non-limiting example of embodiment of the subject of the present invention, provided with reference to the accompanying drawings in which:
- Figure 1 is a schematic cross-sectional view, along an axial vertical plane, of a machine with the device according to the present invention during the advancing movement of the screw;
- Figure 2 is a cross-section along the plane indicated by II-II in Fig. 1;
- Figure 3 is a cross-sectional view, similar to that of Figure 1, with the device during retraction of the screw;
- Figure 4 is a cross-sectional view, along an axial vertical plane, of a second embodiment of the device according to the present invention during the advancing movement;
- Figure 5 is a cross-section, similar to that of Fig. 4, with the device during retraction;
- Figure 6 is a plan view of a further embodiment of the device according to the invention during retraction; and
- Figure 7 is a schematic cross-sectional view, along a vertical plane, of the machine according to Fig. 6 during the advancing movement.

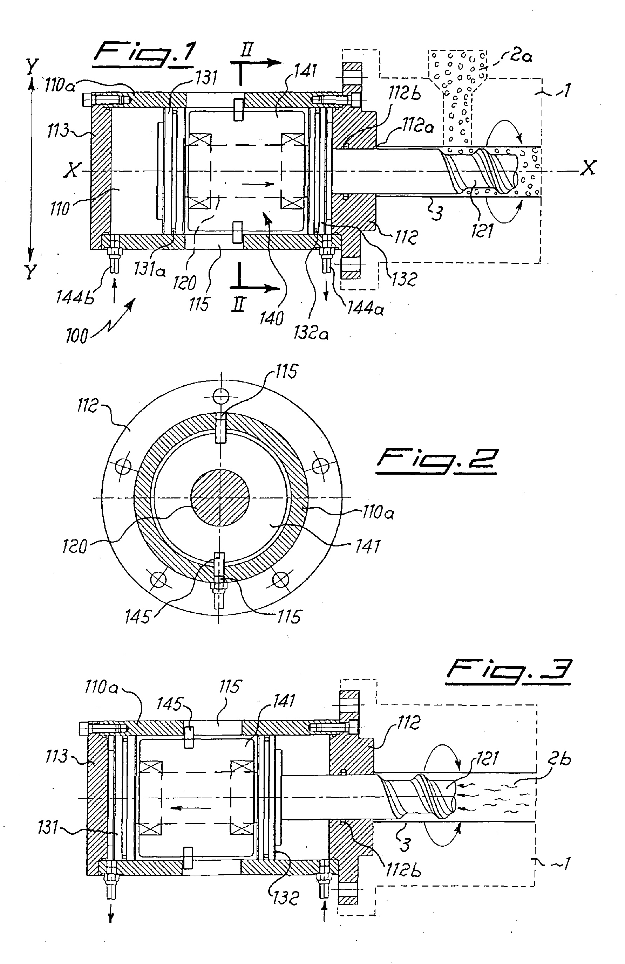

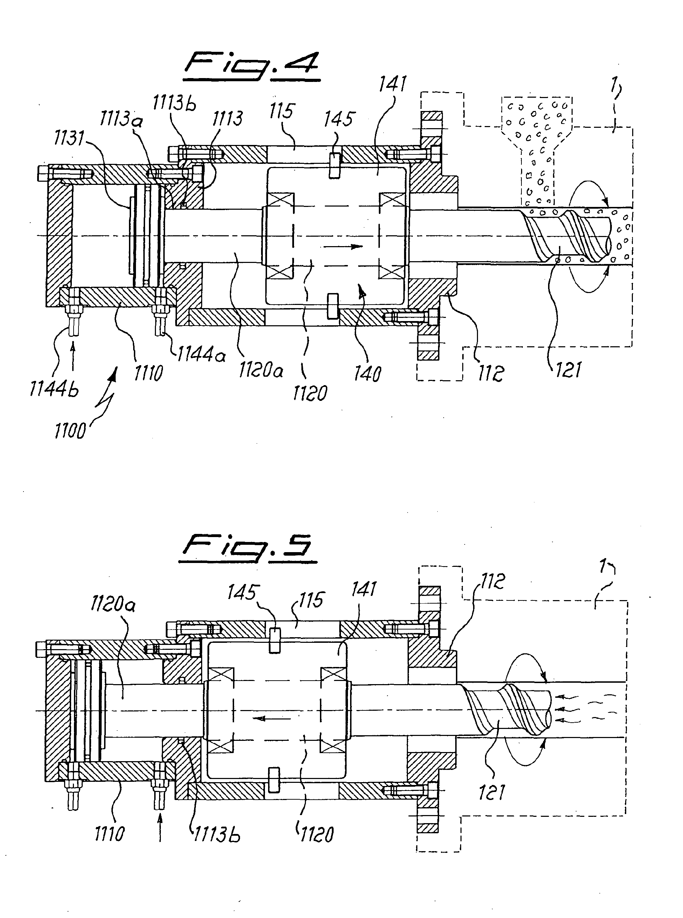

As shown in Fig. 1 and with reference to longitudinal and transverse axes of orientation, X-X and Y-Y respectively, conventionally assumed for the sake of convenience of the description, but not limited thereto, the device 100 according to the present invention is applied to a machine 1 for injecting a polymer 2a, in the form of granules, radially fed to a chamber 3, the outlet of which (not shown) forms the mouth for feeding the liquid polymer 2b (Fig. 3) to a downstream machine such as, for example, an extrusion head.

Below, a front part corresponding to the extended part of the screw and a rear part opposite to the former will also be assumed.

In detail, the device 100 comprises a chamber 110 which is axially closed by a front flange 112 for fastening the device to the machine 1, and by a rear blind cover 113.

The front flange 112 has a coaxial opening, with associated seals 112a, with associated seals 112b, able to receive the shaft 120 forming the shank of the screw 121 for mixing the polymer 2a,2b.

The side wall 110 of the chamber 110 is also provided with two seats 115 extending in the longitudinal direction and able to receive two pins 145 - or equivalent anti-rotation device - radially projecting from the housing 141 of the motor 140 for actuating the shaft 120, which motor is coaxially arranged inside the said chamber 110.

The annular extension of the seats 115 of the cylinder is slightly greater than the outer diameter of the pins 145 - or equivalent anti-rotation device - so that the latter are able to move inside the respective seat in the longitudinal direction, but not rotate about the longitudinal axis X-X.

In this way the motor 140 may therefore be displaced in the longitudinal direction, but not rotate about the corresponding axis X-X.

The chamber 110 has internally two pistons, i.e. rear piston 131 and front piston 132, which are provided with respective annular seals 131a,132a, are mounted on the shaft 120 on opposite sides of the motor 140 in the axial direction and are both able to rotate about the longitudinal axis X-X.

In this way, the chamber 110 forms a double-acting cylinder which houses internally, in an axially movable manner, a rod 120 forming the shaft of the screw 121 for mixing the polymer.

The side surface of the cylinder 100 is also provided with two nozzles, i.e. rear nozzle 144a and front nozzle 144b, for supplying/discharging the actuating fluid.

With the configuration shown, the operating principle of the device is as follows:
- during start-up and mixing and with the motor operating, the cylinder 100 is supplied via the nozzle 144a, with the nozzle 144b being set simultaneously for discharging;
- the fluid acts on the front rotating piston 132, causing the backward movement of the motor 140 and therefore the shaft 120 attached to it as far as the end-of-travel point defined by contact of the rear piston 131 against the rear flange 113;
- the movement of the screw 121 which rotates and at the same time retracts pushes forwards the plastic granules 2a which, along the travel path, melt owing to the heat produced by heating elements (not shown);
- supplying and discharging of the nozzles 144a and 144b are reversed;
- as a result the fluid pushes the rotating piston 132 forwards as far as the respective front stop 112, restoring the initial position;
- from here a new cycle commences.

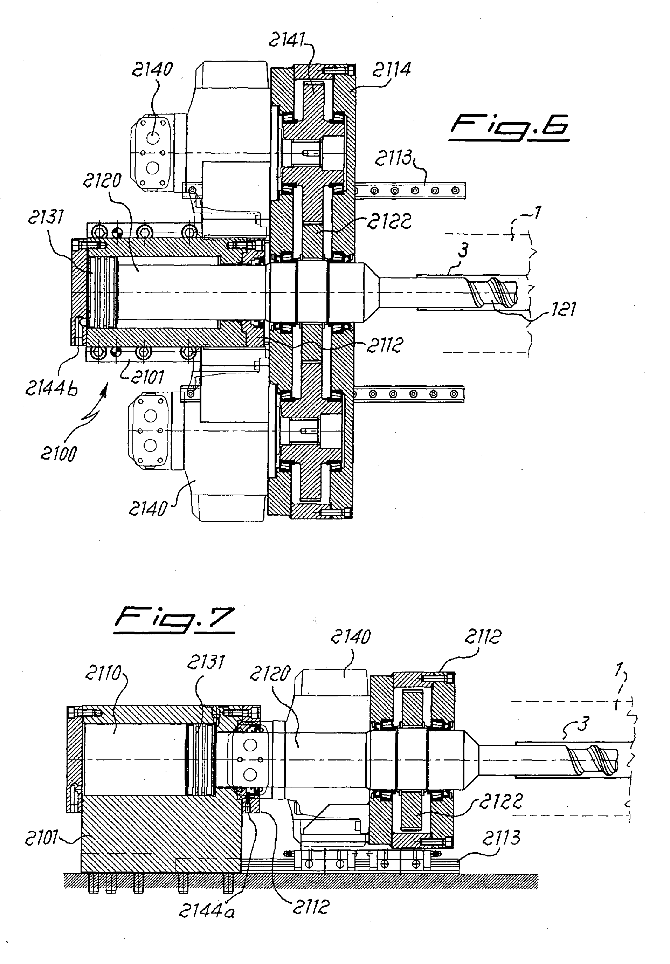

Figs. 4 and 5 show a second embodiment of the device according to the present invention which in this configuration has the double-acting cylinder 1100 mounted externally on the rear cover 1113 of the chamber 110 containing the motor 140.

In greater detail, the cylinder 1100 is mounted coaxially with and at the rear of said chamber 110 and has a single piston 1131 actuated in both senses in the longitudinal direction X-X by means of the fluid supplied via the nozzles 1144a, 1144b which are alternately set to assume the supplying or discharging condition.

As shown, in this case the shaft 1120 is coaxially extended towards the rear by a section 1120a until it is connected to the rotating piston 1131 via an opening 1113a with seals 1113b in the rear cover 1113.

The operating principle of the device is entirely similar to that already described, although with this embodiment it is easier to replace, if necessary, the actuating cylinder 1100 should it be required to use a different sized actuating device for displacement of the screw when the same mixing machine is used for different applications.

Figs. 6 and 7 show a further embodiment of a machine with a device according to the present invention; in this configuration it is envisaged that the cylinder 2100 is rigidly attached to a fixed support 2101 and that the motor 2140 for rotationally driving the shaft 2120 of the screw 121 is situated outside the said cylinder and fixed to a case 2114 which, in this case, is movable in an axial direction on guide rails 2113 from a retracted position substantially in contact with the front flange 2112 of the fixed cylinder 2100 into an advanced end-of-travel position (Fig. 7).

As shown, the case 2114 has internally a gear 2122 rigidly connected to the shaft 2120 and provided with radial teeth for engagement with corresponding gears 2141 actuated by the motor 2140.

In this case also, alternate supplying/discharging of the chamber 2110 of the cylinder via the respective rear nozzle 2144a and front nozzle 2144b causes the movement of the shaft 2120 from the retracted position into the advanced position and vice versa.

This solution is very flexible in that it is possible to couple several motors to the connecting member which therefore acts as a reduction unit, the number of motors being able to vary depending on the power, torque and speed required.

An equal number of motors moreover keeps the system more balanced from the dynamic point of view.

It is therefore clear how, with the device according to the invention, it is possible to achieve movement in the axial direction of the shaft for actuating screws of machines for injecting polymers and similar materials, with substantial simplification of the overall structure, with an increase in the working life and reliability and without the need for incorporating special axial bearings or equivalent mechanical thrust-bearing devices which are replaced by the hydraulic thrust of the same cylinders which move the injection screw.

With the device it is also possible to design the shaft 120,1120 as a single body or as several coaxial parts fastened together.

## Claims

1. Device for moving in the longitudinal direction (X-X) a shaft (120;1120;2120) with screw (121) rotationally driven by a motor (140;2140), **characterized in that** it comprises at least one cylinder (100;1100;2100) coaxial with said shaft (120;1120;2120) and provided with at least one rotating piston (131;1131;2131) rigidly connected to the shaft (120;1120;2120) and able to produce a displacement in either direction of the shaft (120;1120;2120) from a first retracted end-of-travel position into a second advanced end-of-travel position, and vice versa.

2. Device according to Claim 1, **characterized in that** the chamber (110;1110;2110) of said cylinder (100;1100;2100) is axially closed by a front flange (112;2112) and by a blind rear cover (113).

3. Device according to Claim 2, **characterized in that** said front flange (112;2112) has a coaxial opening (112a) with associated seals (112b) able to receive the shaft (120) with screw (121).

4. Device according to Claim 1, **characterized in that** the side surface of the cylinder (100;1100) is provided with two nozzles (144a,144b;1144a,1144b), i.e. rear nozzle and front nozzle, respectively, for supplying/discharging the actuating fluid of the cylinder (100;1100).

5. Device according to Claim 2, **characterized in that** said front flange (112) is rigidly fixed to a mixing machine (1).

6. Device according to Claim 1, **characterized in that** said motor (140) is coaxial with the shaft (120;1120).

7. Device according to Claim 6, **characterized in that** the side wall (110a) of the chamber (110;1110) has an anti-rotation device (145).

8. Device according to Claim 7, **characterized in that** said anti-rotation means comprise two pins (145) projecting transversely from the housing (141) of the motor (140) and able to engage with at least one seat (115) of the side wall (110a) of the chamber (110;1110) of the cylinder.

9. Device according to Claim 8, **characterized in that** the annular extension of the seats (115) in the wall (110a) of the chamber (110) is slightly greater than the outer diameter of the pins (145).

10. Device according to Claim 1, **characterized in that** said motor (140) is arranged inside the cylinder (100).

11. Device according to Claim 10, **characterized in that** the chamber (110) has internally two pistons, i.e. rear piston (131) and front piston (132), respectively, provided with respective annular seals (131a,132a) and mounted on the shaft (120) on opposite sides of the motor (140) in the axial direction.

12. Device according to Claim 10, **characterized in that** said cylinder is mounted coaxially with and at the rear of said chamber (110) containing the motor (140).

13. Device according to Claim 1, **characterized in that** said double-acting cylinder (1100) is mounted externally on the rear cover (1113) of the chamber (110).

14. Device according to Claim 13, **characterized in that** said chamber (110) has a rear closing cover (1113) provided with a coaxial opening (1113a) with seals (1113b), able to receive the shaft (1120).

15. Device according to Claim 1, **characterized in that** said shaft (120) is axially extended beyond the motor (140) on the opposite side to that where the screw (121) is situated.

16. Device according to Claim 12, **characterized in that** said cylinder (1100) has a single rotating piston (1131) actuated in both senses in the longitudinal direction (X-X).

17. Device according to Claim 1, **characterized in that** the cylinder (2100) is rigidly attached to a fixed support (2101).

18. Device according to Claim 17, **characterized in that** the motor (2140) is outside the said cylinder and has its axis parallel to the longitudinal axis (X-X) of the shaft (2120).

19. Device according to Claim 18, **characterized in that** said motor (2140) is fixed to a case (2114) movable axially on guide rails (2113) from said first retracted position into said second advanced position.

20. Device according to Claim 19, **characterized in that** the case (2114) houses internally a gear (2122) rigidly connected to the shaft (2120) and provided with radial teeth for engagement with corresponding gears (2141) actuated by the motor (2140).

21. Machine for mixing and pushing towards an outlet mouth a polymer (2a,2b) supplied from an inlet mouth, comprising a mixing chamber (3) extending in a longitudinal direction and having, coaxially arranged inside it, a shaft (120;1120;2120) with screw (121) rotationally driven by a motor (140), **characterized in that** it has a device for displaceably actuating said shaft (120;1120;2120), comprising at least one cylinder (100;1100;2100) coaxial with said shaft (120;2120) and provided with at least one rotating piston (131) rigidly connected to said shaft (120) and able to produce a displacement in either direction of the shaft (120;1120) from a first retracted end-of-travel position into a second advanced end-of-travel position, and vice versa.

22. Machine according to Claim 1, **characterized in that** the chamber (110;1110;2110) of said cylinder (100;1100;2100)is axially closed by a front flange (112;2112) and by a blind rear cover (113).

23. Machine according to Claim 22, **characterized in that** said front flange (112;2112) has a coaxial opening (112a) with associated seals (112b), able to receive the shaft (120) with screw (121).

24. Machine according to Claim 21, **characterized in that** the side surface of the cylinder (100;1100) is provided with two nozzles (144a,144b;1144a,1144b), i.e. rear nozzle and front nozzle, respectively, for supplying/discharging the actuating fluid of the cylinder (100;1100).

25. Machine according to Claim 22, **characterized in that** said front flange (112) is rigidly fixed to a mixing machine (1).

26. Machine according to Claim 21, **characterized in that** said motor (140) is coaxial with the shaft (120;1120).

27. Machine according to Claim 26, **characterized in that** the side wall (110a) of the chamber (110;1110) has anti-rotation means (145).

28. Machine according to Claim 27, **characterized in that** said anti-rotation means comprise two pins (145) projecting transversely from the housing (141) of the motor (140) and able to engage with at least one seat (115) of the side wall (110a) of the chamber (110;1110) of the cylinder.

29. Machine according to Claim 28, **characterized in that** the annular extension of the seats (115) in the wall (110a) of the chamber (110) is slightly greater than the outer diameter of the pins (145).

30. Machine according to Claim 21, **characterized in that** said motor (140) is arranged inside the cylinder (100).

31. Machine according to Claim 30, **characterized in that** the chamber (110) has internally two pistons, i.e. rear piston (131) and front piston (132), respectively, provided with respective annular seals (131a,132a) and mounted on the shaft (120) on opposite sides of the motor (140) in the axial direction.

32. Machine according to Claim 30, **characterized in that** said cylinder (1100) is mounted coaxially with and at the rear of said chamber (110) containing the motor (140).

33. Machine according to Claim 31, **characterized in that** said double-acting cylinder (1100) is mounted externally on the rear cover (1113) of the chamber (110).

34. Machine according to Claim 33, **characterized in that** said chamber (110) has a rear closing cover (1113) provided with a coaxial opening (1113a) with seals (1113b), able to receive the shaft (1120).

35. Machine according to Claim 21, **characterized in that** said shaft (120) is axially extended beyond the motor (140) on the opposite side to where the screw (121) is situated.

36. Machine according to Claim 22, **characterized in that** said cylinder (1100) has a single rotating piston (1131) actuated in both senses in the longitudinal direction (X-X).

37. Machine according to Claim 21, **characterized in that** the cylinder (2100) is rigidly attached to a fixed support (2101).

38. Machine according to Claim 37, **characterized in that** the motor (2140) is outside the said cylinder and has its axis parallel to the longitudinal axis (X-X) of the shaft (2120).

39. Machine according to Claim 38, **characterized in that** said motor (2140) is fixed to a case (2114) movable axially on guide rails (2113) from said first retracted position into said second advanced position.

40. Device according to Claim 39, **characterized in that** the case (2114) houses internally a gear (2122) rigidly connected to the shaft (2120) and provided with radial teeth for engagement with corresponding gears (2141) actuated by the motor (2140).
